# EUROPÄISCHE PATENTSCHRIFT

(11) **EP 1 395 450 B1**
(45) Veröffentlichungstag und Bekanntmachung des Hinweises auf die Patenterteilung: **19.10.2005**
(21) Anmeldenummer: 02742777.2
(22) Anmeldetag: 23.05.2002
(51) Int. Cl.: B60F 1/02, B60L 13/04

(54) **KOMBIFAHRZEUG ZUR NUTZUNG UNTERSCHIEDLICHER FAHRWEGE**
MULTIPURPOSE VEHICLE FOR VARIOUS TYPES OF TRAVEL WAYS
VEHICULE POLYVALENT DESTINE A DIFFERENTS TYPES DE VOIES DE CIRCULATION

(30) Priorität: 25.05.2001 DE 10125617; 07.12.2001 DE 10160247
(43) Veröffentlichungstag der Anmeldung: 10.03.2004
(73) Patentinhaber: Sobolewski, Walter, 22047 Hamburg (DE)
(72) Erfinder: Sobolewski, Walter, 22047 Hamburg (DE)
(86) Internationale Anmeldenummer: PCT/DE2002/001877
(87) Internationale Veröffentlichungsnummer: WO 2002/094589

(56) Entgegenhaltungen:
- DE-A- 3 841 092
- DE-A- 4 218 001
- GB-A- 331 913
- US-A- 3 994 236
- US-A- 5 289 778

## Beschreibung

Die Erfindung betrifft ein Kombifahrzeugsystem für den Transport von Personen und Gütern, welches für das wahlweise Befahren unterschiedlicher Fahrwege, wie Straße, Schiene, Magnetschwebetechnik geeignet ist.

Gleichzeitig soll das Kombifahrzeugsystem, ähnlich einem PKW, als Individualfahrzeug erhalten bleiben, sich aber durch ein spezielles Koppel- und Verbindungssystem bei Bedarf in ein trassengebundenes Gemeinschaftssystem einfügen können.

### [Stand der Technik]

Die bekannten Transportsysteme sind, jedes für sich gesehen, mit Vor- und Nachteilen belastet.

Das Auto hat als Individualfahrzeug den Vorteil, direkt und bequem von einem Ort zum anderen (sozusagen von Tür zu Tür) Personen oder Güter zu bewegen. Sein Nachteil liegt in einem schlechten Wirkungsgrad und einer hohen Umweltbelastung. Die Fahrwege (Straßen, Autobahnen) sind überlastet und dabei uneffektiv in bezug auf den Fahrzeuginhalt genutzt. Für den Fahrer bedeutet das eine hohe Stressbelastung und das Unfallrisiko, verbunden mit hohen menschlichen und volkswirtschaftlichen Schäden, ist hoch. Der Bau von immer mehr und breiteren Straßen löst diese Probleme nicht, sondern verstärkt die Nachteile.

Das schienen- oder streckengebundene Verkehrssystem Bahn hat teilweise diese Nachteile nicht, dagegen jedoch den Nachteil der mangelnden Individualität und Flexibilität, starre Fahrzeiten und umständliche Anfahrtswege. Eine dadurch geringe Ausnutzung des Schienensystems bewirkt relativ hohe Fixkosten.

Ähnlich wie beim schienengebundenen Verkehr verhält es sich mit der Magnetschwebetechnik, die ebenfalls ein streckengebundenes Verkehrssystem ist. Gegenüber den Vorteilen, hohe Geschwindigkeit und guter Wirkungsgrad, treten die bereits beim schienengebundenen Verkehr genannten Nachteile noch stärker in Erscheinung.

Eine Verbindung von Individual- und schienengebundenen Verkehr könnte hier Abhilfe schaffen.

Kombifahrzeugsysteme, die sowohl auf der Straße als auch auf der Schiene fahren, sind bekannt. Bei allen diesen Fahrzeugen sind aufwendige Vorrichtungen für ein Heranführen der Fortbewegungsmittel (Spurkranzrad, Straßenrad) notwendig, um von der Straße auf die Schiene und umgekehrt zu wechseln (Absenkvorrichtungen, separate Achsen, variabler Reifendruck usw.). Die Spurkranzräder müssen bei Schienenfahrten tiefer als die Druckluftreifen liegen, um problemlos auch Weichen befahren zu können.

Zur Lösung dieses Problems werden getrennte Radsysteme verwendet, die relativ zueinander eine horizontale und vertikale Entfernungsvariation zulassen müssen.

In der DE 38 41 092 A1 wird ein Kombinationsfahrzeugsystem, das sowohl auf der Straße als auch auf der Schiene fahren kann, beschrieben. Darüber hinaus finden die Besonderheiten der Verkehrswege Berücksichtigung sowie eine optimale Anpassung von Fahrzeugen und Verkehrswegen.

Grundsätzlich besteht die Aufgabe dieser älteren Erfindung darin, ein System Schienenrad/Straßenrad zu schaffen, das durch horizontale und vertikale Entfernungsvariation, der für das Befahren der unterschiedlichen Verkehrswege vorgesehenen Räder zueinander, den Übergang von einem Verkehrsweg auf den anderen ermöglicht.

Zusätzlich zu dem Straßenrad- Sehienenradsystamen sind Magnetleit- und Antriebseinrichtungen angeordnet, die für einen reibungslosen Verkehrsfluss sorgen und der Führung entlang der Verkehrswege dienen.

Die Magnetsysteme tragen zu einer Entlastung der Fahrbahn bei, dienen aber nicht als eigenständige Antriebsart. Auch können die Magnetleiteinrichtungen durch magnetische Fang- und Führungsschienen dazu beitragen einen Spurwechsel vorzunehmen und somit auf konventionelle Weichen verzichten.

Der Nachteil dieser Erfindung besteht darin, dass dieses Kombinationsfahrzeugsystem nur zwei Fahrwege (Schiene, Straße) befahren kann und das Fahrzeug mit komplizierten Straßenrad/Schienenrad- Wechselmechanismen ausgestattet ist. Darüber hinaus fehlt die Möglichkeit, ein und dasselbe Fahrzeug speziellen Nutzungsbedürfnissen anzupassen. Und ein weiterer gravierender Nachteil besteht darin, das nur dieses Kombinationsfahrzeugsystem auf besonderen dafür hergerichteten Trassen fahren kann und ein Befahren mit konventionellen Fahrzeugen nicht mehr möglich ist. Das betrifft insbesondere die Weichentechnik und die Übergänge von einer Fahrbahn auf die andere.

Eine Kombination eines Straßenfahrzeuges mit der Magnetschwebetechnik ist ebenfalls grundsätzlich bekannt. Auch hier ist eine einfache additive Kombination wegen der komplizierten Fahrbahntechnik nicht gegeben.

Ein solches Transportsystem, das sowohl für ein Befahren der Straße als auch für die Nutzung der Magnetschwebetechnik vorgesehen ist, beschreibt die Patentschrift DE 42 18 001 C2.

Dieses Fahrzeug kann sowohl auf einer Straße als auch auf einer Magnetschwebetrasse fahren, hat aber den Nachteil, dass ein schneller Wechsel von einem Fahrweg auf den anderen nicht möglich ist, für unterschiedliche Transportaufgaben sind unterschiedliche Fahrzeuge und für ein reibungsloses Befahren der Magnetschwebetrasse komplizierte Weichensysteme erforderlich.

### [Aufgabe der Erfindung]

Aufgabe der Erfindung ist es, ein Kombifahrzeugsystem mit lösbarem Chassis- Verbindungssystem für unterschiedliche Fahrwege und zur Einkopplung individueller Fahreinheiten in ein übergeordnetes Gemeinschaftssystem zu schaffen, das einfach im Aufbau ist, problemlos die Übergänge von einem Fahrweg zu dem anderen schafft sowie Weichen, Kreuzungen und andere Unstetigkeitsstellen bewältigt und einen schnellen Austausch von Nutzaufbauten erlaubt.

Das Kombifahrzeugsystem soll weitestgehend vorhandene Trassen nutzen, um diese effektiver auszunutzen, Umwelt und Ressourcen zu schonen und die Transportleistung zu steigern. Noch nicht vorhandene Trassen, wie die Magnetschwebetrasse sollen in einfachster Weise und mit geringstem Aufwand realisiert werden.

Die Aufgabe wird mit den erfindungsgemäßen Merkmalen des 1. Patentanspruchs gelöst. Vorteilhafte Weiterentwicklungen und Ausgestaltungen sind Gegenstand der Unteransprüche.

Das Kombifahrzeugsystem ist für drei Fortbewegungsarten, nämlich Rad - Straße, Rad - Schiene und Magnetschwebetechnik ausgelegt und zu diesem Zweck mit unterschiedlichen Fortbewegungsmittel, wie Straßenrad, Spurkranzrad, und Spulen zur Erzeugung eines elektromagnetischen Feldes ausgerüstet, so dass es alternativ als Straßen-, Schienen-, oder Magnetschwebefahrzeug einsetzbar ist.

Um problemlos einen schnellen Übergang von einer Fahrbahn auf die andere realisieren zu können, werden am Fahrzeug nur geringe Änderungen vorgenommen. Diese Veränderungen beziehen sich lediglich auf den Übergang von der Straße oder der Schiene auf die Magnetschwebetrasse und beinhalten ein Ausfahren oder Ausschwenken stromführender Magnetspulen für die Magnetschwebetechnik, die am Chassis des Fahrzeuges angeordnet sind.

Für den Übergang auf die Magnetschwebetrasse ist es zweckmäßig, zunächst von der Straße auf die Schiene zu wechseln und ein genügend langes spurführendes Schienenstück parallel zur Magnetschwebetechnik einzusetzen.

Mittels dieses Schienenabschnittes ist es in einfacher Weise auch möglich, Kreuzungen und Weichen einer Magnetschwebetrasse im Schienenbereich zu realisieren, wobei dabei die Magnetschwebetrasse unterbrochen wird.

In einer weitergehenden Ausführungsform bleibt sogar die Schiene für die Funktionen Tragen und Fortbewegen mittels Magnetschwebetechnik erhalten.

Im Bereich des Straßen- und Schienensystems wird für das Befahren von Weichen, Kreuzungen und anderen Unstetigkeitsstellen innerhalb einer Fahrbahn und für das Befahren von Kreuzungen unterschiedlicher Fahrbahnen nicht wie im Stand der Technik das Fahrzeug verändert, sondern die Fahrbahn.

Somit kann für die Fortbewegungsart Rad - Schiene und Rad - Straße mit der erfindungsgemäßen Lösung das Spurkranzrad direkt mit dem Straßenrad vereinigt werden, indem der Spurkranz direkt an die Felge angesetzt ist.

Bei diesem einfachen Aufbau können die kombinierten Luft-Spurkranzräder mit Radnaben-Elektroantrieben ausgerüstet werden.

Die Bewältigung der Unstetigkeitestellen im Bereich Straße und Schiene, z.B. Bahnübergänge, wird erfindungsgemäß durch ein Absenken oder Anheben einer Fahrbahn relativ zu der anderen erreicht. Bei Kreuzungen und Weichen im Schienenbereich sind lediglich zur Freigabe der entsprechenden Strecke kleine Teilstücke der Schlenensträge herauszuschwenken oder abzusenken, damit das neben dem Spurkranz angeordnete und im Durchmesser größere Straßenrad problemlos passieren kann.

Es ist aber auch denkbar, die Bereiche der Unstetigkeitsstellen mittels Straßenabschnitten zu umgehen. Das heißt vor und nach jeder Unstetigkeitsstelle werden Rampen eingesetzt, die den Übergang von der Schiene auf die Straße oder umgekehrt erlauben. Diese Art der Bewältigung von Unstetigkeitsstellen könnte beispielsweise in Bahnhofs- und Rangierbereichen zweckmäßig sein.

Zur schnellen Bewältigung dieser Übergänge von einer Fahrbahn auf die andere oder der Umgehung von Unstetigkeitsstellen sind die Rampen mit mechanischen und elektronischen Leiteinrichtungen ausgerüstet.

Für den Einsatz des Kombifahrzeugsystems als Magnetschwebefahrzeug sind beiderseits am Chassis Träger für mindestens vier ausfahrbare bzw. ausschwenkbare stromführende Magnetspulen vorgesehen, während für die Fortbewegung beiderseits am Fahrzeug Asynchron- Kurzstatormotoren angeordnet sind.

Demgegenüber sind an dem Fahrweg beiderseits der Trasse Fahrzeugtragschienen mit integrierter Transportschiene erforderlich. Alternativ zu dem Einsatz von Asynchron- Kurzstatormotoren am Fahrzeug kann auch ein Langatatormotor entlang der Trasse innerhalb der Transport- oder Führungsschiene eingesetzt werden.

Es ist aber, wie bereits erwähnt, auch denkbar, die bereits vorhandenen Schienen selbst für die Funktionen Tragen und Fortbewegen mittels Magnetschwebetechnik zu nutzen. Auf zusätzliche Fahrzeugtrag- und Transportschienen, wie zuvor beschrieben, kann dabei verzichtet werden.

Zu diesem Zweck werden zwischen den Spurkranzrädern, die nach wie vor die konventionelle Fortbewegung auf den Schienen ermöglichen sollen, auf und neben der Schiene Einheiten mit Trage- Elektromagneten und Asynchron- Kurzstatormotoren bzw. alternativ dazu Langstatormotoren neben oder unmittelbar an den Schienen angeordnet. Die Schienen dienen also slbst als Transport- und Fahrzeugtragschiene. Die Magnetschwebeeinheiten sind unterhalb der Wagenkästen angeordnet und werden an die Schiene bis auf wenige Zentimeter herangeschwenkt, so dass sie dann während der Fahrt über einen Luftspalt längst der Schiene, getragen durch das Magnetfeld, gleiten.

Der Einsatz der Trage- Elektromagnete und der Asynchron-Kurzstatormotoren, bzw. dem Langstatormotor unmittelbar an der Schiene gestattet dem Fahrzeug auch im Schwebezustand die Nutzung von Schienenkreuzungen und Weichen.

Eine besonders vorteilhafte Ausführungsform des Kombifahrzeugsystems ergibt sich aus einer Modulbauweise, bestehend aus einem Traktionskopf und einem oder mehreren Nachlaufteilen, die mittels eines speziellen Chassisverbindungssystems miteinander verbunden sind.

Durch diesen Aufbau kann einerseits das Kombifahrzeugsystem als Individualfahrzeug unterschiedlichen Verwendungen und Nutzungen angepasst werden und anderseits sich in übergeordnete trassengebundene Gemeinschaftssysteme einkoppeln.

Für ein wendiges Befahren aller Trassen im Zug- oder Schubbetrieb ist es von Vorteil, das mindestens ein Nachlaufteil fest, aber durch das spezielle Chassisverbindungssystem leicht koppelbar mit dem Traktionskopf verbunden ist. Weitere Nachlaufteile können dann beliebig wie Anhänger gelenkig angekoppelt werden.

Durch die Ausbildung eines einheitlichen Fahrzeuges, bestehend aus dem Traktionskopf und dem Nachlauf teil, aber ohne Anhänger, sind die gesetzlichen Geschwindigkeitabesehränkungen im Straßenverkehr, die für Fahrzeuge mit Anhängern gelten, nicht anwendbar. Die Freizügigkeit wird somit mit dem Kombifahrzeugsystem gegenüber konventionellen Lösungen allein schon auf der Straße erhöht.

Der Traktionskopf ist ein, mit allen notwendigen Antriebsaggregaten und Steuereinrichtungen ausgerüstetes Fahrzeugteil, das für sich allein, alle oder auch nur bestimmte Fahrwege befahren kann. In der Verbindung des Traktionskopfes mit einem Nachlaufteil kann das Fahrzeug immer alle Fahrwege benutzen.

Der Traktionskopf ist mit einem Fahrzeugführer bestückt, kann aber darüber hinaus, wie beim Auto, der Beförderung weiterer Personen dienen. Das Nachlaufteil kann demgegenüber unterschiedlichen Nutzungebedürfnissen angepasst sein, wie Stückguttransport, Campingkoffer, Tankfahrzeug, Personenbeförderung und vieles andere mehr. Es lassen sich entweder schwere Transportfahrzeuge oder Kleintranaporter und Wohnmobile realisieren.

Für einen reibungslosen und getakteten Durchsatz der spurgebundenen Trassen kann der Verbund Traktionskopf und Nachlaufteil führerlos automatisch gesteuert werden.

Als zweckmäßig für die Kombination Traktionskopf und Nachlaufteil ergibt sich, dass das Nachlaufteil lediglich die Hinterradachse des Verbundes bildet und dass das Nachlaufteil eine Hinterradbremseinrichtung und eine Stromzufuhr besitzt, die über die Kupplungselemente vom Traktionskopf versorgt werden.

Durch die besondere Ausgestaltung des Verbindungssystems des Traktionskopfes mit dem Nachlaufteil ist es insbesondere möglich, eine vertikal verstellbare Hängerkupplung zu realisieren, bei der eine geringe Anhebung ausreichend ist, um eine verhältnismäßig große Veränderung der Horizontalpositionierung des Chassis des Nachlaufteiles zu erreichen.

Dieser Effekt wird insbesondere auch dadurch unterstützt, dass das Chassis des Traktionskopfes hinter einer Fahrerkabine ein verhältnismäßig langes Laschende aufweist, das einen relativ hohen Hebelarm bereitstellt. Bei einer Anhebung der Hängerkupplung wird das Chassis des Nachlaufteiles im vorderen Bereich mit angehoben. Ein Verbindungselement, an dem das hintere Ende des Chassis des Traktionskopfes befestigt ist, wird hierdurch ebenfalls mit angehoben.

Unterstützend kann wirken, dass der Traktionskopf nach vorne verkantet wird. Es entsteht hierdurch eine Scherenwirkung, die bewirkt, dass eine Rückseite des Fahrerhauses mit angehoben wird. Im Bereich der Rückseite des Fahrerhauses kann die Hängerkupplung befestigt sein, so dass sich eine Scherenwirkung zwischen einem Bängerkupplungskopf und einer Kupplungsklaue relativ gering auswirkt, während dessen aufgrund des langen Hebelarmes am Ende des Chassis des Traktionskopfes eine große Horizontalneigung beim Chassis des Nachlaufteiles entsteht.

Um die entsprechende Neigung, sowohl des Traktionskopfes als auch des Nachlaufsteils zu erreichen ist es zweckmäßig, die hintere Achse des Traktionskopfes und die vordere Achse des Nachlaufteiles vertikal verstellbar anzuordnen.

Alle durchzuführenden mechanischen oder elektrischen Verbindungen zwischen dem Traktionskopf und dem Nachlaufteil erfolgen durch vertikale Bewegungen bei einer Überführung des Fahrzeuges aus dem abgeknickten in den horizontalen Zustand. Hierdurch sind die Verbindungen von Zugkräften in Richtung der Fahrzeuglängsachse entlastet.

Der Traktionskopf ist zweckmäßigerweise derart mit dem Nachlaufteil verbunden, dass nach dem Verbund nur zwei Achsen für das Befahren von Straße und Schiene ausgelegt sind. Für den Traktionskopf ist das die vordere und für den Nachlaufteil die hintere Achse. Die übrigen Achsen dienen beim Traktionskopf einem schnellen, sparsamen und wendigen Befahren im lokalen Bereich. Beispielsweise will man am Urlaubsort nicht ständig mit dem schweren Wohnmobilteil die Gegend erkunden.

Das Nachlaufteil benötigt im Verbund mit dem Traktionskopf die vordere Achse nur zum Wechseln, Rangieren und Ankoppeln an den Traktionskopf. Danach werden die nicht unbedingt benötigten Radaufhängungen am Kombifahrzeugsystem, die ohnehin für das Verbundsystem vertikal verstellbar sind, soweit angehoben, dass sie zur Straße und zur Schiene einen ausreichenden Abstand haben.

Für eine leichtere und einfachere Variante des Kombifahrzeugsystems reicht es deshalb aus, die hintere Achse des Traktionskopfes und die vordere Achse des Nachlaufteiles nur mit leichten Stützrädern auszustatten.

Das Anheben der nicht benötigten Achsen ist auch deshalb erforderlich, damit die Wendigkeit der befahrbaren Trassen auch im Verbund erhalten bleibt.

Für das Befahren der vorhandenen Straßen- und Schienentrassen ist das Kombifahrzeugsystem so ausgelegt, dass diese weitestgehend unverändert bleiben aber effektiver ausgenutzt werden, Umwelt und Ressourcen geschont und die Transportleistung gesteigert wird.

Da Magnetschwebetrassen bisher nur für Versuchszwecke realisiert wurden, kann man diese in einfachster Weise und mit geringem Aufwand in Verbindung mit den vorhandenen Trassen realisieren und von vorn herein für die Nutzung mit dem erfindungsgemäßen Kombifahrzeugsystem auslegen. So könnten beispielsweise die Fahrzeugtragschienen direkt am Bahnkörper angeordnet und gegebenenfalls über die Schwellen mit den Schienen verbunden werden.

Aber nicht einmal das ist notwendig. Wie bereits erwähnt, kann die Schiene selbst die Funktionen Tragen und Fortbewegen mittels Magnetschwebetechnik übernehmen.

In der Verbindung der Schienenwege mit der Magnetschwebetechnik können somit auch vorhandene Bahnfahrzeuge, wie U- und S-Bahn, durch Magnetschwebetechnik schneller, effektiver und umweltschonender betrieben werden.

### [Beispiele]

An Hand von Zeichnungen werden einige Ausführungsformen der erfindungsgemäßen Lösung näher beschrieben.

Es zeigen:
- Fig. 1: das Kombifahrzeugsystem zur Verwendung auf drei Fahrwegen in einer Schnittdarstellung im Bereich eines Fahrzeugtragarmes und eines Asynchron- Kurzstatomotors,
- Fig. 2: das Kombifahrzeugsystem im Verbund von Traktionskopf und Nachlaufteil zur Verwendung auf drei Fahrwegen in einer Ansicht von unten,
- Fig. 3: Eine Seitenansicht des Kombifahrzeugsystems mit geschlossenem Verbindungssystem in der Einheit Traktionskopf und Nachlaufteil,
- Fig. 4: Die Seitenansicht des Kombifahrzeugsystems gemäß Fig. 3 bei einem Lösen bzw. Zusammenfügen des Traktionskopfes mit dem Nachlaufteil,
- Fig. 5: Eine Rampe für den Übergang Straße- Schiene,
- Fig. 6: Eine mögliche Ausgestaltung der Fahrzeugrtragschiene mit der Transportschiene längst einer Trasse,
- Fig. 7: Eine Schienenkreuzung,
- Fig. 8: Eine Schienenweiche,
- Fig. 9: Eine Kreuzung Straße- Schiene mit Schranke,
- Fig. 10: Ein Nachlaufchassis mit rollbarer Lastaufnahmeeinrichtung,
- Fig. 11: Eine Schnittzeichnung eines Fahrzeuges (angedeutet) mit ausschwenkbaren Trage- Elektromagneten auf einer Schiene,
- Fig. 12: Eine Seitenansicht eines Fahrzeuges nach Fig. 11 mit Trage- Elektromagnet und Asynchron- Kurzstatormotor auf einer Schiene.

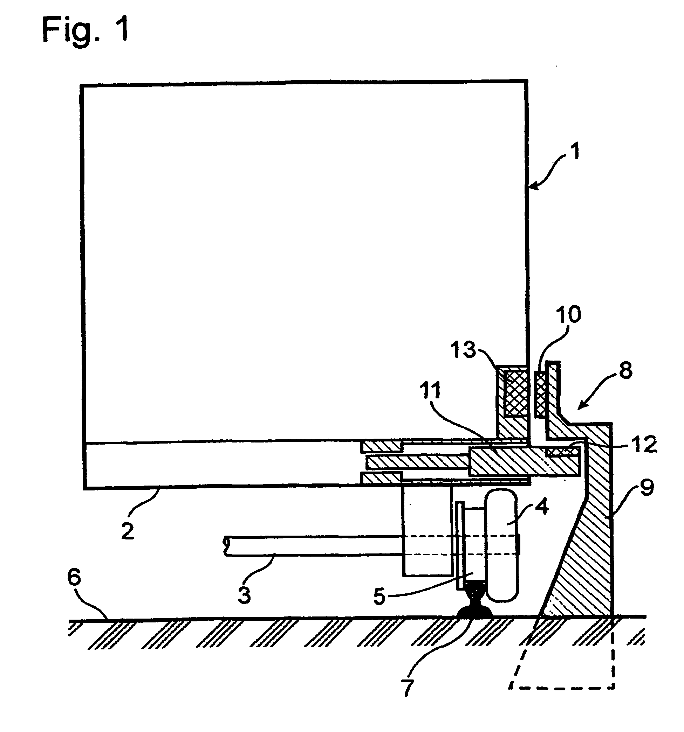

Fig. 1 zeigt das Kombifahrzeugsystem 1 in einer schematischen Schnittdarstellung für den alternativen Einsatz auf drei Fahrwegen; Straße 6, Schiene 7 und Magnetschwebetrasse 8.

Zur Vereinfachung der Zeichnung ist nur eine Seite des Fahrzeuges 1 mit einem Rad 4, 5 dargestellt.

Für das Fahren auf der Straße 6 besitzt das Kombifahrzeugsystem 1 Straßenräder 4, für das Fahren auf Schienen 7 Spurkranzräder 5 und für den Einsatz als Schwebefahrzeug ist eine Magnetschwebetrasse 8 angeordnet.

Straßenrad 4 und Spurkranzrad 5 sind auf einer Achse 3 angeordnet, wobei das Spurkranzrad 5 im Durchmesser kleiner als das Straßenrad 4 ausgebildet ist, bzw. der Spurkranz 5 direkt an die Felge des Straßenrades 4 angesetzt ist.

Für den alternativen Einsatz des Kombifahrzeugsystems 1 als Magnetschwebefahrzeug sind beiderseits am Chassis 2 mindestens vier Fahrzeugtragarme 11 (In Fig. 1 ist nur ein Fahrzeugtragarm 11 erkennbar) mit ausfahrbaren bzw. ausschwenkbaren stromführenden Elektromagneten 12 zu Erzeugung des Magnetfeldes für den Schwebezustand angeordnet.

Die Fahrzeugtragarme 11 können durch eine Gewindestange, mit hydraulischen oder elektromagnetischen Mitteln ein- und ausgefahren werden.

Das Magnetfeld des Elektromagneten 12 baut sich gegenüber einer Fahrzeugtrageachiene 9, die beiderseits längs der Trasse verläuft, auf. Zu diesem Zweck besteht zumindest ein Teil der Fahrzeugtrageschiene 9 aus Eisen.

Für die Fortbewegung entlang der Magnetschwebetrasse 8 sind beiderseits am Chassis 2 des Kombifahrzeugsystems 1 Asynchron-Kurzstatormotoren 13 angeordnet, die gegenüber einer Transportschiene 10 ein elektromagnetisches Wanderfeld aufbauen.

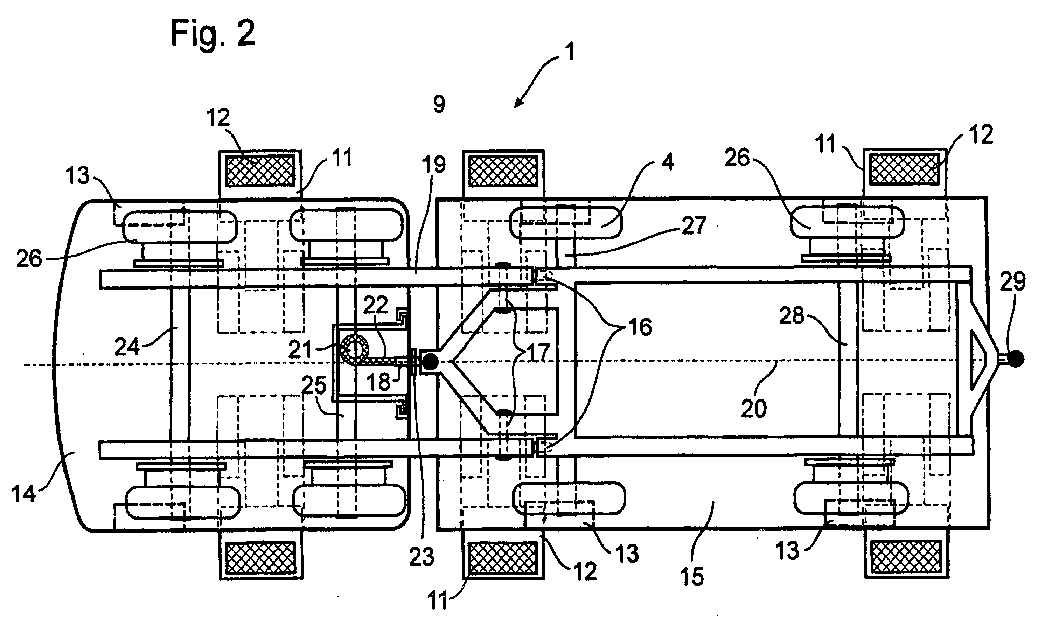

Ein besonders vorteilhafter Aufbau des Kombifahrzeugsystems 1 ist in Fig. 2 dargestellt.

Für eine individuelle Anpassung an unterschiedliche Nutzungsbedürfnisse besteht das Fahrzeug 1 aus einem Traktionskopf 14 und einem, verschiedenen Nutzungsbedürfnissen anpassbaren Nachlaufteil 15.

Der Traktionskopf 14 ist mit dem Nachlaufteil 15 über ein Verbindungssystem verkoppelt, dass aus einem Verbindungslängszapfen 16, einem Verbindungsquerzapfen 17 sowie einem Kupplungsbolzen 18 ausgebildet ist. Die Verbindungslängszapfen 16 können beispielsweise mit einem Chassis 19 des Traktionskopfes 14 verbunden sein und greifen in Buchsen ein, die korrespondierend im Bereich des Traktionakopfes 14 angeordnet sind. Die Verbindungslängszapfen 16 erstrecken sich in Richtung einer Fahrzeuglängsachse 20. Die Verbindungsquerzapfen 17 sind quer zur Fahrzeuglängsachse 20 angeordnet. Der Kupplungsbolzen 18 erstreckt sich ebenfalls in Richtung der Fahrzeuglängsachse 20.

Da die beiden Verbindungslängszapfen 16 und der Kupplungsbolzen 18 bereits schon allein eine stabile Dreiecksverbindung zwischen dem Traktionskopfes 14 und dem Nachlaufteil 15 schaffen, haben die Verbindungsquerzapfen 17 nur eine zusätzliche Sicherheitsfunktion. Die Verbindungsquerzapfen 17 können zur Aufnahme großer Gewichtskräfte auch als eine einfache Auflage dienen.

Der Kupplungsbolzen 18 ist von einer Winde 21 in Richtung der Fahrzeuglängsachse 20 positionierbar. Eine Verbindung des Kupplungsbolzens 18 mit der Winde 21 erfolgt über eine flexible Kopplung 22. Die Kopplung 22 kann beispielsweise als Kette ausgebildet sein, es ist aber auch möglich, hochfeste Seile einzusetzen. Zur Begrenzung der Positionierbarkeit des Kupplungsbolzens 18 ist ein Distanzkragen 23 vorgesehen, der sich quer zur Fahrzeuglängsachse 20 erstreckt.

Sowohl am Traktionskopf 14 als auch am Nachlaufteil 15 sind Fortbewegungsmittel für alle drei Fortbewegungsarten wie Rad - Straße 4, Rad - Schiene 5 und Magnatschwebetechnik 8 angeordnet.

Der Traktionskopf 14 besitzt in der Ausführung nach Fig. 2 zwei Achsen 24 und 25. Beide Achsen 24 und 25 können mit kombinierten Spurkranz- Straßenrädern 26 für ein alternatives Befahren der Straße 6 oder der Schiene 7 ausgerüstet sein. Es ist aber auch möglich nur die vordere Achse 24 mit Spurkranz-Straßenrädern 26 zu bestücken, während die hintere Achse 25 nur einfache Straßenräder 4 trägt. Diese Variante ist zweckmäßig, wenn der Traktionskopf 14 allein ausschließlich im örtlichen Nahverkehr eingesetzt wird. Außerdem muss die vordere Achse 24 für den Straßenverkehr lenkbar ausgeführt sein.

Des weiteren ist an jeder Seite des Traktionskopfes 14 ein ausfahrbarer Fahrzeugtragarm 11 mit Trage- Elektromagnet 12 und ein Asynchron- Kurzstatormotor 13 angeordnet. Sollte der Traktionskopf 14 auch für sich allein eine Magnetschwebetrasse 8 befahren können, müssen mindestens zwei Trage- Elektromagnete 12 auf jeder Seite des Traktionskopfes 14 angeordnet werden.

Das Nachlaufteil 15 besitzt ebenfalls eine vordere Achse 27 und eine hintere Achse 28. Die hintere Achse 28 ist mit Spurkranz- Straßenrädern 26 ausgerüstet, während die vordere Achse 27 nur Straßenräder 4 trägt, die während des Rangierens und Ankoppelns im Straßenbereich benötigt werden.

Wegen der Länge des Nachlaufteils 15 sollten in jedem Fall an jeder Seite mindestens zwei ausfahrbare Fahrzeugtragarme 11 mit Trage- Elektromagneten 12 und zwei Asynchron- Kurzstatormotoren 13 angeordnet werden.

Im Verbund bildet der Traktionskopf 14 mit dem Nachlaufteil 15 ein einheitliches Fahrzeug mit hoher Wendigkeit, das für alle drei Verkehrswege einsetzbar ist. Die hintere Achse 25 des Traktionskopfes 14 und die vordere Achse 27 des Nachlaufteiles 15 werden dabei nicht benötigt und deshalb angehoben.

Am hinteren Ende des Nachlaufteiles 15 ist eine Hängerkupplung 29 angeordnet, über die Anhänger, ähnlich im Aufbau des Nachlaufsteils 15, aber ohne vertikale Verstellbarkeit der vorderen Achse 27 und mit vier Spurkranz- Straßenrädern 26 ausgerüstet, gelenkig angekoppelt werden können. Der Zugbetrieb mit mehreren Anhängern ist vor allem für den schienengebundenen Verkehr zweckmäßig.

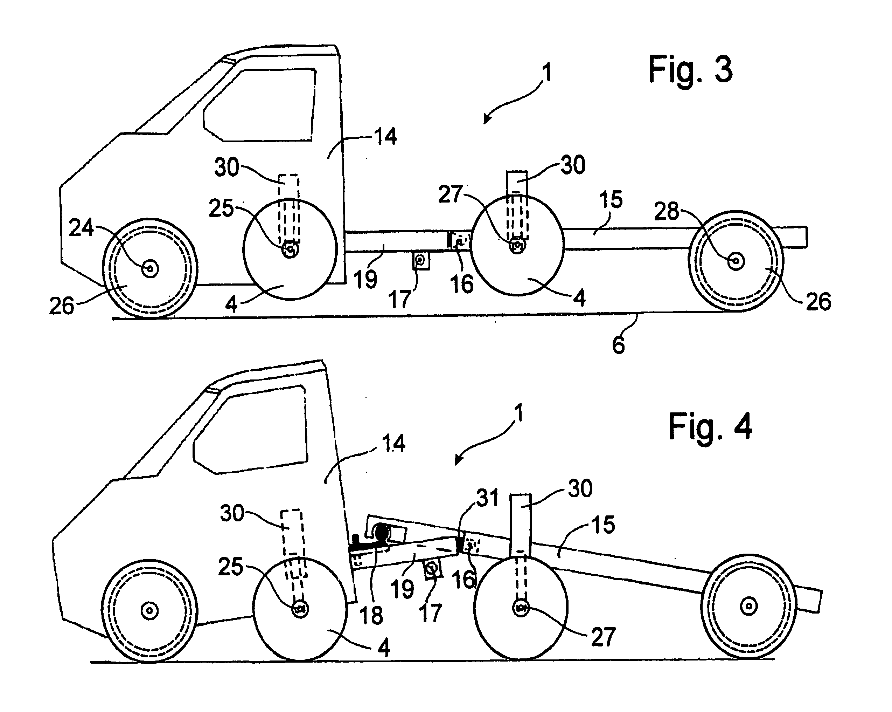

Fig. 3 zeigt die Verbindung des Traktionskopfes 14 mit dem Nachlaufteil 15 in einem zusammengefügten Zustand der Verbindungslängszapfen 16 und der Verbindungsquerzapfen 17 mit den jeweils korrespondierenden Elementen. Die hintere Achse 25 des Traktionskopfes 14 und die vordere Achse 27 des Nachlaufteils 15 sind für einen wendigen Betrieb auf der Straße 6 oder auf der Schiene 7 mittels einer vertikal verstellbaren Radaufhängung 30 angehoben, so dass nur die Achsen 24 und 28 des Kombifahrzeugsystems 1 mit dem entsprechenden Fahrweg 6 oder 7 in Verbindung stehen.

Die Mittel für die Magnetschwebetechnik 8 wurden in Fig. 3 wie auch in Fig. 4 weggelassen.

Die Fig. 4 zeigt die Anordnung gemäß Fig. 3 in einem abgeknickten Zustand, die ein Zusammenfügen bzw. Trennen des Traktionskopfes 14 und des Nachlaufteils 15 zulässt. Im Bereich des Verbindungslängszapfens 16 erstreckt sich hierbei ein Abknickbereich 31. Der Kupplungsbolzen 18 ist in Richtung des Nachlaufteils 15 verschoben und mittels einer vertikalen Verstellung über das Laschende des Chassis 19 des Traktionskopfes 14 herausgehoben.

Die notwendige Scherenwirkung für das Trennen bzw. Zusammenfügen des Kombifahrzeugsystems 1 wird durch ein Ausfahren der vertikal verstellbaren Radaufhängung 30 an den Achsen 25 und 27 erreicht.

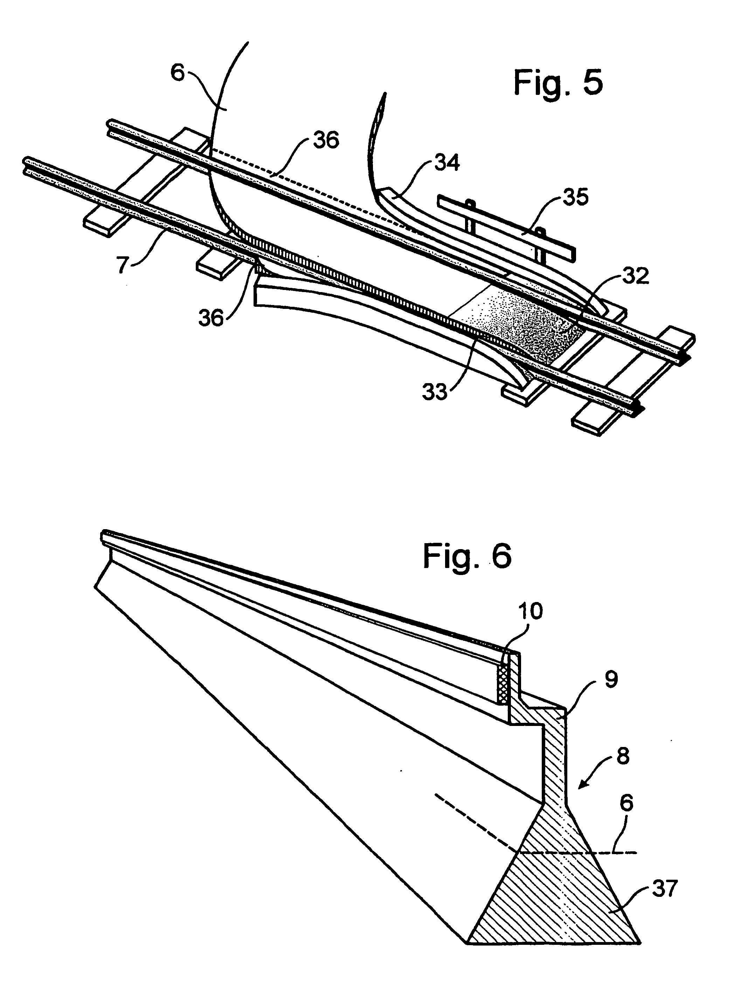

Eine Rampe für den Übergang von der Straße 6 zum Schienenweg 7 und umgekehrt zeigt Fig. 5.

Direkt an der Übergangsstelle ist ein Absenkbereich 32 vorgesehen, der ein Aufsetzen der Spurkranzräder 5 auf die Schienen erlaubt. Im Innenbereich der Schienen 7 muss ein Spalt oder eine Einsenkung 33 (wie auch bei der Straßenbahn) für den Spurkranz der Spurkranzräder 5 oder Kombiräder 26 freigehalten werden.

Um eine genaue Spurführung zu erreichen ist die Rampe mit mechanischen 34 und elektronischen Leiteinrichtungen 35 für die Spurführung ausgerüstet.

Für den Durchgangsverkehr eines Kombifahrzeugsystems 1 auf der Schienentrasse 7 sind die äußeren Fahrwegsbereiche 36 links und rechts der Schienentrasse 7 absenkbar oder aufklappbar ausgeführt.

Ein möglicher Aufbau einer Magnetsehwebetrasse 8 mit einer Fahrzeugtragschiene 9 und einer Transportschiene 10 ist in Fig. 6 dargestellt. Abgebildet ist nur eine Seite der Trasse. Die andere Seite ist spiegelverkehrt analog mit der Durchlassbreite für ein Fahrzeug aufgebaut.

Die Fahrzeugtragschiene 9 ist durch ein stabiles Fundament 37 im Erdboden 6 verankert. Es ist aber auch denkbar die Fahrzeugtragschiene 9 direkt an einem Bahnkörper bzw. mit den Schwellen der Schienen 7 zu verbinden. Das ist besonders für den Übergang von der Schiene 7 zur Magnetschwebetechnik 8 zweckmäßig oder für die Nachrüstung von Bahnkörpern mit der Magnetschwebetechnik 8.

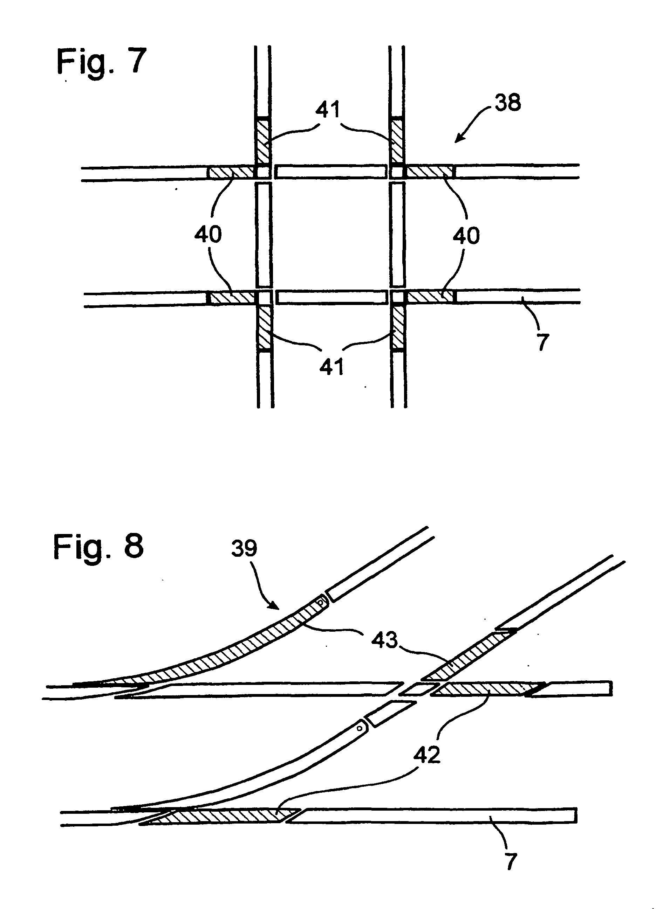

Fig. 7 zeigt eine Kreuzung 38 von Schienentrassen 7 für das Befahren von Kombifahrzeugsystemen 1 mit kombinierten Spurkranz-Straßenrädern 26. Die schraffierten Schienenstücke 40 müssen dafür für die Freigabe der einen Richtung und die schraffierten Schienenstücke 41 für die Freigabe der anderen Richtung abgesenkt bzw. herausgeklappt werden.

Ähnlich wie in Fig. 7 die Kreuzung 38 muss auch eine Weiche 39, dargestellt in Fig. 8, konstruiert sein. Die schraffierten Schienenstücke 43 müssen für die Freigabe der geraden Richtung und die schraffierten Schienenstücke 42 für die Freigabe der abzweigenden Richtung abgesenkt bzw. herausgeklappt werden, wobei eines der Schienenstücke 43 gleichzeitig eine der Weichenzungen ist.

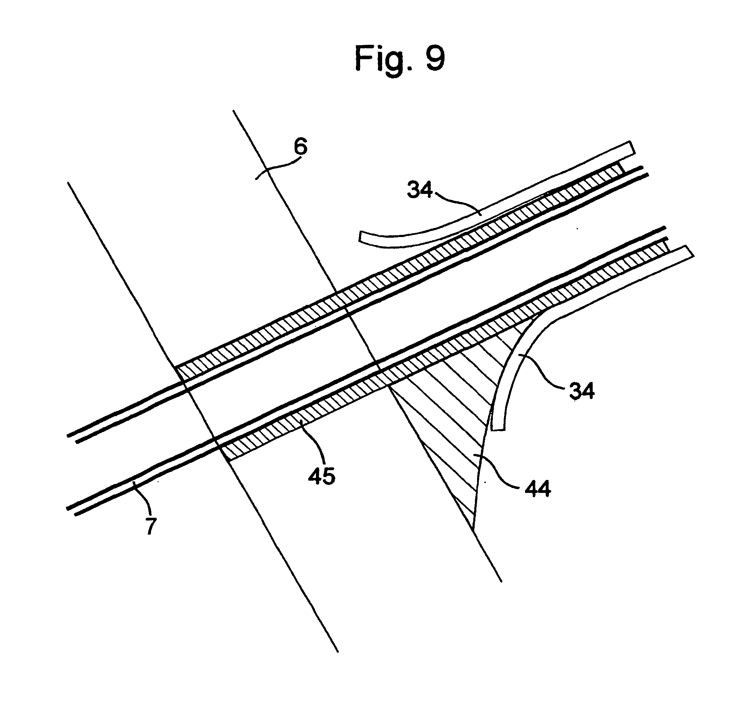

Fig. 9 zeigt die Kreuzung einer Straße 6 mit einer Schienentrasae 7 mit gleichzeitigen Anschluss einer Rampe gemäß Fig. 4 für den Übergang von der Straße 6 zur Schiene 7 und umgekehrt. Für die Freigabe der Schienentrasse 7 werden die Straßenabschnitte 45 abgesenkt oder hochgeklappt. Über den Auffahrbereich 44 gelangt man in die Rampe und zwischen die Führungs- und Leiteinrichtungen 34.

Der Bahnübergang kann zusätzlich mit Schranken ausgestattet werden, die zusammen mit dem Abklappen der Straßenabschnitte 45 schließbar sind.

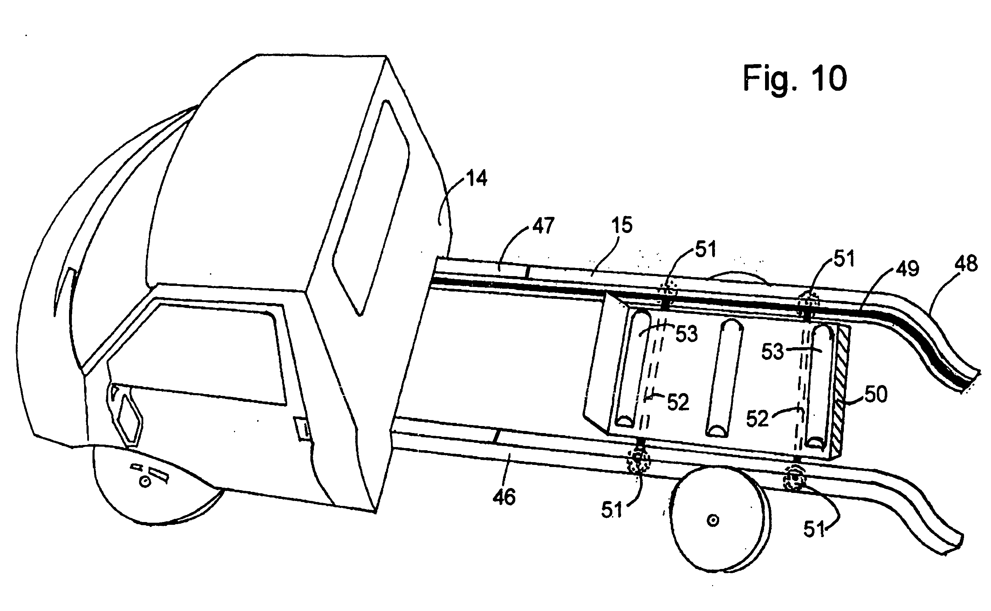

Gemäß der Ausführungsform des Kombifahrzeugsystems nach Fig. 2 und Fig. 3 ist in Fig. 10 vorgesehen, im Bereich von Seitenträgern 46, 47 des Nachlaufteils 15 Bahnen 48 anzuordnen, die beispielsweise als geschlitzte Rohre 49 ausgebildet sein können. In die Bahn 48 greift ein Laufwagen 50 mit Laufrädern 51 ein, die von Laufwagenachsen 52 gehaltert sind. Der Laufwagen 50 ist mit Abrollwalzen 53 versehen. Beispielsweise ist es möglich, hintereinander drei Abrollwalzen 53 anzuordnen. Zur Erleichterung eines Ladens oder Absetzens von Lasten mit Hilfe des Laufwagens 50 ist vorgesehen, die dem Traktionskopf 14 abgewandte Enden der Bahn 48 mit einer langgestreckten S-Kontur zu versehen. Die S-Kontur erstreckt sich ausgehend von einem linearen Verlauf der Bahnen 48 in Richtung auf die Fahrbahnfläche.

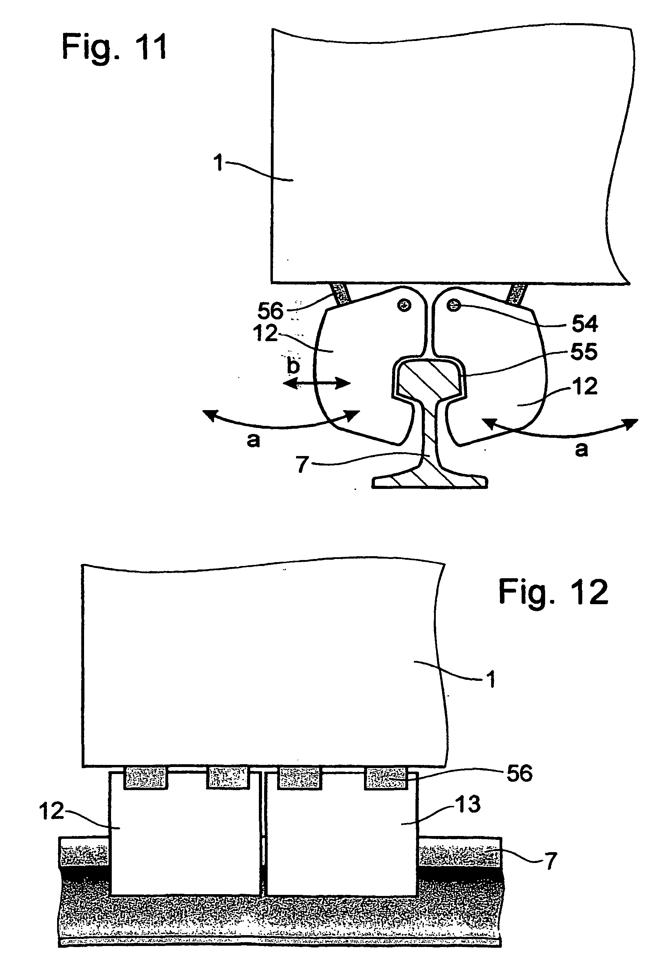

Für die Nutzung der Funktionen Tragen und Fortbewegen mittels Magnetschwebetechnik auf vorhandenen Schienen 7 ist in Fig. 11 und Fig. 12 ein mögliches Ausführungsbeispiel dargestellt. Fig. 11 zeigt eine Schnittzeichnung mit an einem Fahrzeug 1 (angedeutet) angeordneten, an eine Schiene 7 an- und abschwenkbaren Trage- und Führungselementen, bestehend aus hintereinander angeordneten Trage- Elektromagneten 12 und Asynchron- Kurzstatormotoren 13 für die Magnetschwebetechnik. Die Magnetschwebeelemente 12, 13 sind unterhalb des Wagenkastens des Fahrzeuges 1 angeordnet und werden über Drehgelenke 54 an die Schiene 7 bis auf wenige Zentimeter herangeschwenkt (Weg a), so dass sie dann während der Fahrt über einen Luftspalt 55 längst der Schiene 7, getragen durch das Magnetfeld, gleiten. Arretierbare Abstützungen 56, die gegebenenfalls auch gefedert oder mit Stoßdämpfern versehen sein können, halten die Magnetschwebeelemente 12, 13 in einer stabilen Lage. Zur Anpassung an unterschiedliche Spurbreiten sind die Magnetschwebeelemente 12, 13 horizontal verschiebbar (Weg b).

Schienenkreuzungen 38 und Weichen 39 gemäß Fig. 7 und Fig. 8 werden hierzu mit beweglichen Schienenstücken wie 40 - 43 so beidseitig der Schienen ausgestattet, dass die Trage- Elektromagnete 12 und die Asynchron- Kurzstatormotoren 13 passieren können.

Fig. 12 zeigt die Seitenansicht des Fahrzeuges 1 nach Fig. 11 mit dem Trage- Elektromagnet 12 und dem dahinter angeordneten Asynchron- Kurzstatormotor 13 auf der Schiene 7. Die Magnetschwebeeinheiten 12, 13 sind so kurz ausgebildet, dass auch bei Kurvenfahrten ein ausreichender Luftspalt 55 erhalten bleibt.

### [Bezugszeichenliste]

- Kombifahrzeug - System: 1
- Chassis: 2
- Fahrzeugachse: 3
- Straßenrad: 4
- Spurkranzrad: 5
- Erdboden bzw. Straße: 6
- Schiene: 7
- Magnetschwebetrasse: 8
- Fahrzeugtrageschiene: 9
- Transportschiene: 10
- Fahrzeugtragarm: 11
- Trage- Elektromagnet: 12
- Asynchron- Kurzstatormotor: 13
- Traktionskopf: 14
- Nachlaufteil: 15
- Verbindungslängazapfen: 16
- Verbindungsquerzapfen: 17
- Kupplungsbolzen: 18
- Chassis Traktionskopf mit Laschende: 19
- Fahrzeuglängsachse: 20
- Winde: 21
- Flexible Kupplung: 22
- Distanzkragen: 23
- Vordere Achse Traktionskopf: 24
- Hintere Achse Traktionskopf: 25
- Kombiniertes Spurkranz- Straßenrad: 26
- Vordere Achse Nachlaufteil: 27
- Hintere Achse Nachlaufteil: 28
- Hängerkupplung: 29
- Vertikal verstellbare Radaufhängung: 30
- Abknickbereich Laschende: 31
- Absenkbereich Straße: 32
- Spurkranzeinsenkung: 33
- Mechanische Leiteinrichtung: 34
- Elektronische Leiteinrichtung: 35
- Äußerer Fahrwegsbereich entlang einer Schienentrasse: 36
- Fundament für Magnetschwebetrasse: 37
- Schienenkreuzung: 38
- Schienenweiche: 39
- Bewegliche Schienenstücke Kreuzung: 40,41
- Bewegliche Schienenstücke Weiche: 42,43
- Auffahrbereich: 44
- Abklappbare Straßenabschnitte: 45
- Seitenträger: 46,47
- Bahnen: 48
- Geschlitzte Rohre: 49
- Laufwagen: 50
- Laufräder: 51
- Laufwagenachsen: 52
- Abrollwalzen: 53
- Drehgelenke: 54
- Luftspalt: 55
- Abstützung: 56

## Patentansprüche

1. Kombifahrzeugsystem, das für unterschiedliche Nutzungsbedürfnisse und Fortbewegungsarten wie Rad - Straße, Rad - Schiene und Magnetschwebetechnik ausgelegt ist und durch die Auswahl unterschiedlicher Fortbewegungsmittel, wie Straßenrad, Spurkranzrad, elektromagnetisches Feld entweder als Straßen- und Schienenfahrzeug oder Als Straßen- und Magnetschwebefahrzeug einsetzbar ist, wobei die am Fahrzeug angeordneten Fortbewegungsmittel für das Befahren von Weichen, Kreuzungen und anderen Unstetigkeitsstellen innerhalb einer Fahrbahn und das Befahren von Kreuzungen von unterschiedlichen Fahrbahnen einen veränderbaren horizontalen und vertikalen Entfernungsausgleich besitzen und wobei für den Übergang von einer Fahrbahn einer Fortbewegungsart auf eine Fahrbahn einer anderen Fortbewegungsart Leiteinrichtungen und Rampen angeordnet sind, wobei das Kombifahrzeugsystem (1) mit Fortbewegungsmitteln alternativ für drei Fahrbahnen ausgerüstet ist, die für die Fortbewegungsarten Rad - Straße (6), Rad - Schiene (7) und Magnetschwebetechnik (8) ausgelegt sind, das Kombifahrzeugsystem (1) für die Fortbewegungsart Rad - Straße (6) und Rad - Schiene (7) mit Straßenrad (4) und Spurkranzrad (5) ausgerüstet ist, wobei das Spurkranzrad (5) im Durchmesser kleiner als das Straßenrad (4) ausgebildet ist und beide auf einer Achse (3) fest miteinander verbunden sind, am Kombifahrzeugsystem (1) für den alternativen Einsatz als Magnetschwebefahrzeug beiderseits am Chassis (2) Tragarme (11, 56) mit ausfahrbaren bzw. ausschwenkbaren stromführenden Magnetspulen (12) für die Magnetschwebetechnik (8) sowie für die Fortbewegung beiderseits am Kombifahrzeugsystem (1) Asynchron- Kurzstatormotoren (13) oder alternativ dazu Langstatormotoren an der Trasse angeordnet sind, für den Übergang von einer Fortbewegungsart auf die andere die Fahrbahnen (6, 7) relativ zueinander, vertikal veränderbar sind, zur Überwindung von Unstetigkeitsstellen, wie Kreuzungen (38), Weichen (39), Bahnübergänge, Teile der Fahrbahnen (40, 41, 42, 43, 45) relativ zueinander absenkbar oder abklappbar sind und für den Übergang zur Magnetschwebetechnik (8) oder zur Überwindung von Unstetigkeitsstellen innerhalb der Magnetschwebetrasse (8) spurführende Schienenabschnitte (7) angeordnet sind.

2. Kombifahrzeugsystem nach Anspruch 1, **dadurch gekennzeichnet, dass** zur Realisierung der drei Fortbewegungsarten (6, 7, 8) und für eine individuelle Anpassung an unterschiedliche Nutzungsbedürfnisse das Fahrzeug (1) aus einem Traktionskopf (14) und einem oder mehreren, verschiedenen Nutzungsbedürfnissen entsprechenden Nachlaufteilen (15) besteht, die durch ein lösbares Chassis- Verbindungssystem (16, 17, 18, 19) mit dem Traktionskopf (14) oder untereinander verbunden sind.

3. Kombifahrzeugsystem nach Anspruch 1 und 2, **dadurch gekennzeichnet, dass** der Traktionskopf (14) für sich allein oder in Verbindung mit einem Nachlaufteil (15) mit Fortbewegungsmitteln (4, 5, 12, 13. 26) für drei Fortbewegungsarten (6, 7, 8) ausgerüstet ist.

4. Kombifahrzeugsystem nach Anspruch 1 bis 3, **dadurch gekennzeichnet, dass** die luftbereiften Räder (4) mit den Spurkränzen (5) zu einem Kombirad (26) verbunden sind, indem der Spurkranz (5) direkt an der Felge des luftbereiften Rades (4) angeordnet ist.

5. Kombifahrzeugsystem nach Anspruch 1, **dadurch gekennzeichnet, dass** für die Funktionen Führen und Tragen der Magnetschwebetechnik (8) auf dem Fahrweg beiderseits der Trasse eine Fahrzeugtragachiene (9) mit integrierter Transport- oder Führungsschiene (10) angeordnet ist.

6. Kombifahrzeugsystem nach Anspruch 1, **dadurch gekennzeichnet, dass** für die Funktionen Führen und Tragen mittels Magnetschwebetechnik (8) die Schiene (7) als Fahrzeugtragschiene (9) und Transportschiene (10) dient.

7. Kombifahrzeugsystem nach Anspruch 1 und 6, **dadurch gekennzeichnet, dass** für die Funktionen Führen und Tragen mittels Magnetschwebetechnik (8) am Kombifahrzeugsystem (1) ein- oder zweiteilige, um Gelenke (54) schwenkbare, die Schiene (7) umgreifende Trage- Elektromagnete (12) und Asynchron-Kurzstatormotoren 13 angeordnet sind.

8. Kombifahrzeugsystem nach Anspruch 1, **dadurch gekennzeichnet, dass** die Rampen und Leiteinrichtungen mit mechanischen (34) und elektronischen Spurführungs- und Einfädelsystemen (35) versehen sind.

9. Kombifahrzeugsystem nach Anspruch 1 und 8, **dadurch gekennzeichnet, dass** für den Übergang von der Straße (6) zur Magnetschwebetrasse (8) ein Rad- Schiene Abschnitt (7) angeordnet ist.

10. Kombifahrzeugsystem nach Anspruch 1 und 4, **dadurch gekennzeichnet, dass** die kombinierten Luft- Spurkranzräder (26) einen Radnaben-Elektroantrieb besitzen.

11. Kombifahrzeugsystem nach Anspruch 1 bis 3, **dadurch gekennzeichnet, dass** in den Nachlaufteilen (15) eine fest installierte Elektroenergieversorgungsanlage für Beleuchtung, Elektroantrieb sowieSteuerfunktionen und eine fest installierte Bremsanlage angeordnet ist.

12. Kombifahrzeugsystem nach Anspruch 1 bis 3, und 11, **dadurch gekennzeichnet, dass** der Traktionskopf (14) hinter der Fahrerkabine ein verhältnismäßig langes, starres bzw. abwinkelbares Laschende (19) besitzt.

13. Kombifahrzeugsystem nach Anspruch 1 bis 3 und 12, **dadurch gekennzeichnet, dass** an der Rückseite des Traktionskopfes (14) eine vertikal und horizontal verstellbare, mit zwei synchron geschalteten Seilwinden (21) ausgestattete Anhängerkupplung (18) ausfahrbar und schwenkbar angeordnet ist.

14. Kombifahrzeugsystem nach Anspruch 1 bis 3 und 11, **dadurch gekennzeichnet, dass** neben der Anhängerkupplung (18) Steckverbindungen für die Stromversorgungen und Bremsanlagen der Nachlaufteile angeordnet sind, die synchron durch die ausfahrbare Anhängerkupplung kontaktierbar sind.

15. Kombifahrzeugsystem nach Anspruch 1 bis 3, 11 und 14, **dadurch gekennzeichnet, dass** am Nachlaufteil (15) bzw. am Traktionskopf (14) Kupplungselemente (16) für die Aufnahme der Laschenden (19) angeordnet sind.

16. Kombifahrzeugsystem nach Anspruch 1 bis 3, 11, 14 und 15, **dadurch gekennzeichnet, dass** das Chassis (46, 47) des Nachlaufteiles (15) aus geschlitzten Rohrteilen (49) besteht, die am hinteren Ende eine S-Kontur aufweisen.

17. Kombifahrzeugsystem nach Anspruch 1 bis 3 und 16, **dadurch gekennzeichnet, dass** ein mit Walzen (53) ausgestatteter rollbarer Lasthalter (50) im aufgeschlitzten Chassisrohr (49) angeordnet ist.

18. Kombifahrzeugsystem nach Anspruch 1, **dadurch gekennzeichnet, dass** zur Überwindung von Unstetigkeitsstellen im Bereich der Fortbewegungsart Rad - Schiene (7), Teilstücke der Fahrbahn (40, 41, 42, 43) absenkbar oder abklappbar sind.

19. Kombifahrzeugsystem nach Anspruch 1, **dadurch gekennzeichnet, dass** beim Übergang von der Straße (6) zur Schiene (7) und umgekehrt, im Bereich von Weichen (39) und Bahnübergängen Rampen zum Ausgleich des Fahrwegeniveaus angeordnet sind.

20. Kombifahrzeugsystem nach Anspruch 1 und 19, **dadurch gekennzeichnet, dass** die am Bahnübergang, außerhalb der Bahngleise (7), unmittelbar an den Gleisen (7) angrenzende Fahrbahn (45) als eine schwenkbare befahrbare Platte angeordnet ist, die derart mit einer Bahnschranke verbunden ist, dass durch Schließen oder Öffnen der Bahnschranke die befahrbare Platte (45) absenkbar bzw. aufklappbar ist.

21. Kombifahrzeugsystem nach Anspruch 1 bis 3, **dadurch gekennzeichnet, dass** die Radaufhängungen (25, 27) am Kombifahrzeugsystem (1) durch eine Radaufhängung (30) vertikal verstellbar angeordnet sind.

22. Kombifahrzeugsystem nach Anspruch 1, 6 bis 7, **dadurch gekennzeichnet, dass** zur Anpassung an unterschiedliche Spurbreiten sowohl die Räder (5, 26) als auch die Magnetschwebe- und Fortbewegungselemente (12, 13) am Kombifahrzeugsystem (1) horizontal und orthogonal zur Trasse (7) verschiebbar angeordnet sind.

## Claims

1. The combination vehicle constructed for various use requirements and types of locomotion such as wheel/road, wheel/rail and magnetic levitation and, through the selection of various means of locomotion such as road wheel, flange wheel, electromagnetic field, useable as a road vehicle and a rail vehicle or as a road vehicle and a maglev vehicle, provided with means of locomotion attached to the vehicle for driving through switches, intersections and other points of discontinuity within a roadway and provided with a adjustable horizontal and vertical distance regulation for driving through intersections of various roadways, equipped with control devices and ramps for the transition from one roadway of a type of locomotion to another roadway of another type of locomotion, **characterized** as follows:
the combination vehicle (1) is equipped with alternative means of locomotion for three types of roadways designed for the locomotion types wheel/road (6), wheel/rails (7) and magnetic levitation (8);
the combination vehicle (1) is equipped for the locomotion type wheel/street (6) and wheel/rails (7) with road wheels (4) and flange wheels (5), with the flange wheel (5) being smaller in diameter than the road wheel (4) and both connected firmly with each other on an axle (3);
for the alternative use as maglev vehicle, the combination vehicle (1) has carrier arms (1, 56) with extendable or hinged current-carrying magnetic coils (12) on both sides of the chassis (2) for magnetic levitation (8) and for locomotion asynchronous short-stator motors (13) on both sides of the combination vehicle (1) or, alternatively, long-stator motors on both sides of the line;
for the transition from one type of locomotion to another, the roadways (6, 7) are vertically adjustable in relation to each other to overcome points of discontinuity such as intersections (38), switches (39), level crossings;
parts of the roadways (40, 41, 42, 43, 45) can be lowered or swung out relatively to each other, and for the transition to magnetic levitation (8) or to overcome points of discontinuity within the maglev line (8) tracking rail sections (7) are installed.

2. According to claim 1, the combination vehicle is **characterized by** the fact that for the realization of all three types of locomotion (6, 7, 8) and for an individual adaptation to requirements of various types of use, the vehicle (1) consists of a traction head (14) and one or more trailer elements (15) - depending on the various requirements of the respective type of use - connected to the traction head (14) or to each other by a engaging and disengaging chassis connection system (16, 17, 18, 19).

3. According to claims 1 and 2, the combination vehicle is **characterized by** the fact that the traction head (14) alone or combined with a trailer element (15) is equipped with means of locomotion (4, 5, 12, 13, 26) for three types of locomotion (6, 7, 8).

4. According to claims 1 to 3, the combination vehicle is **characterized by** the fact that the pneumatic wheels (4) are combined with the wheel flanges (5) to combined wheel (26) through the direct arrangement of the wheel flange (5) on the rim of the pneumatic wheel (4).

5. According to claim 1, the combination vehicle is **characterized by** the fact that for the guiding and transportation functions of the magnetic levitation (8) a vehicle carrier rail (9) with integrated transport or safety rail (10) is arranged on the roadway on both sides of the line.

6. According to claim 1, the combination vehicle is **characterized by** the fact that for the guiding and supporting functions through magnetic levitation (8) the track (7) serves as vehicle carrier rail (9) and transport rail (10).

7. Combination vehicle according to claims 1 and 6, **characterized in that** single- or two-part supporting-solenoids, which are rotatable about hinges (54) and which encompass the track, and asynchronous short-stator engines (13) are arranged at the combination vehicle (1) for the functions of guiding and supporting by means of magnetic levitation (8).

8. According to claim 1, the combination vehicle is **characterized by** the fact that the ramps and the control devices are provided with mechanical (34) and electronic tracking and ramp control systems (35)

9. According to claims 1 and 8, the combination vehicle is **characterized by** the arrangement of a wheel/rail section (7) for the transition from the road (6) to the maglev line (8).

10. Combination vehicle according to claims 1 and 4, **characterized in that** the combined flange/road wheels (26) feature an electrical drive for the nave.

11. Combination vehicle according to claims 1 to 3, **characterized in that** a fixedly installed electric energy supply arrangement for lighting, electric drive, as well as control functions and a fixedly installed break assembly is arranged inside the trailer elements (15).

12. According to claim 1 to 3 and 11, the combination vehicle is **characterized by** the fact that the traction head (14) is provided with a relatively long, rigid or bendable shackle end (19) behind the driver's cab.

13. According to claims 1 to 3 and 11, the combination vehicle is **characterized by** the fact that a vertically and horizontally adjustable trailer coupling (18) equipped with two extendable and hinged synchronous rope winches (21) is arranged on the rear side of the traction head.

14. Combination vehicle according to claims 1 to 3 and 12 **characterized in that** socket connections for the current supply and for the break system of the trailer systems, which are synchronously contactable via the extendable coupling bolt, are arranged next to the coupling bolt (18).

15. Combination vehicle according to claims 1 to 3, 11 and 14, **characterized in that** longitudinal joining elements (16) for receiving the shackle ends (19) are disposed at the trailer element (15) or at the traction head (14), respectively.

16. Combination vehicle according to claims 1 to 3, 11, 14 and 15, **characterized in that** the chassis (46, 47) of the trailer element (15) consists of slotted pipe elements (49), which feature an S-contour at the rear end.

17. Combination vehicle according to claims 1 to 3 and 16, **characterized in that** a bogie wagon (50) equipped with rollers (53) is diposed inside the slotted pipe (49).

18. Combination vehicle according to claim 1, **characterized in that** sections of the roadway (40,41, 42, 43) can be lowered or swiveled in order to overcome discontinuities in the region of the locomotive mode wheel - track (7).

19. Combination vehicle according to claim 1, **characterized in that** ramps for balancing of the level of the railway are disposed at the transition from the street (6) to the track (7) and vice versa, in the area around railway switches (39) and railroad crossings.

20. Combination vehicle according to claims 1 and 19, **characterized in that** the access area (45) at the railroad crossing, outside of of the tracks (7), adjacent to the tracks (7) is arranged as a swiveling practicable plate, which is connected to a gate in such a way that by closing or opening of the gate the practicable plate (45) can be lowered or swiveled.

21. Combination vehicle according to claims 1 to 3, **characterized in that** the wheel suspensions (25, 27) at the combination vehicle (1) are arranged vertically adjustably by means of a wheel suspension (30).

22. Combination vehicle according to claims 1, 6 to 7, **characterized in that** for the adaptation to various track widths, the wheels (5, 26) as well as the maglev elements and elements of locomotion (12, 13) are arranged on the combination vehicle (1) horizontally and orthogonally moveably with respect to the route (7).

## Revendications

1. Système de véhicule hybride, conçu pour différents modes d'utilisation et de locomotion tels que roue - route, roue - rail et sustentation magnétique et utilisable soit en tant que véhicule sur route ou sur rail soit en tant que véhicule sur route et à sustentation magnétique selon qu'il est équipé de différents modes de locomotion tels que roue, roue à boudin, champ électromagnétique, les moyens de locomotion étant installés sur le véhicule pour le passage d'aiguillages, de croisements et autres surfaces discontinues sur une voie ainsi qu'au franchissement de croisements de différentes voies étant équipés d'un compensateur de distance modifiable horizontalement et verticalement et des dispositifs de guidage et des rampes étant aménagés pour le passage d'une voie avec un système de locomotion à une autre voie avec un autre système de locomotion, le système de véhicule hybride (1) étant équipé de systèmes de locomotion adaptés à trois types de voies et prévus pour les modes de locomotion roue - route (6), roue - rail (7) et sustentation magnétique (8). Le système de véhicule hybride (1) est équipé pour le système de locomotion roue - route (6) et roue - rail (7) avec roue pour route (4) et roue à boudin (5), la roué à boudin (5) présentant un diamètre inférieur à celui de la roue pour route (4), les deux étant fixées entre elles sur un essieu (3). En fonctionnement véhicule à sustentation magnétique, des bras porteurs (11, 56) sont installés de chaque côté du châssis du système de véhicule hybride avec des bobines magnétiques (12) conductrices, extensibles et articulées pour la sustentation magnétique (8), des moteurs asynchrones à stator fixe 13 de chaque côté du système de véhicule hybride (1) ou en alternative des moteurs linéaires à stator long le long du tracé assurent le déplacement. Pour la transition d'un moyen de locomotion à un autre, les voies (6, 7) sont relativement attenantes, modifiables à la verticale, relativement abaissables ou pliables pour le passage de surfaces discontinues telles que croisements (38), aiguillages (39), passages à niveau, sections des voies (40, 41, 42, 43, 45)., des segments de rail de guidage (7) sont installés pour la transition en sustentation magnétique (8) ou pour le passage de surfaces discontinues à l'intérieur de l'axe de sustentation magnétique (8).

2. Système de véhicule hybride selon revendication 1, **caractérisé** comme suit : afin de procéder à l'exécution des trois systèmes de locomotion (6, 7, 8) et pour une adaptation individuelle aux différents modes d'utilisation du véhicule (1), ce dernier est composé d'une tête de traction (14) et d'un ou de plusieurs éléments de chasse (15) adaptés à différents modes d'utilisation et reliés avec la tête de traction (14) ou entre eux par un système de raccordement de châssis (16, 17, 18, 19) amovible.

3. Système de véhicule hybride selon revendications 1 et 2, **caractérisé** comme suit : la tête de traction (14) seule ou raccordée à un élément de chasse (15) est équipée de système de locomotion (4, 5, 12. 13. 26) pour trois modes de locomotion (6, 7, 8).

4. Système de véhicule hybride selon revendications 1 à 3, **caractérisé** comme suit : les roues montées sur pneus à air (4) sont reliés aux boudins (5) pour former une roue combinée (26), le boudin (5) étant placé directement contre la jante de la roue sur pneu (4).

5. Système de véhicule hybride selon revendication 1, **caractérisé** comme suit : un rail porteur (9) avec rail de transport ou rail-guide (10) est placé sur la voie de chaque côté du tracé pour la conduite et le support de la sustentation magnétique (8).

6. Système de véhicule hybride selon revendication 1, **caractérisé** comme suit : les rails (7) servent de rail porteur (9) et de rail de transport (10) pour la conduite et le support par sustentation magnétique (8).

7. Système de véhicule hybride selon revendication 1 et 6, **caractérisé** comme suit : des électroaimants et des aimants de support (12), uniques ou doubles, pivotant sur les articulations (54) et enveloppant le rail (7) ainsi que des moteurs asynchrones à stator fixe 13 sont installés sur le véhicule hybride (1) pour la conduite et le support par sustentation magnétique (8).

8. Système de véhicule hybride selon revendication 1, **caractérisé** comme suit : les rampes et les équipements de guidage sont équipés de dispositifs de guidage et d'insertion (35) mécaniques (34) et électroniques.

9. Système de véhicule hybride selon revendications 1 et 8, **caractérisé** comme suit : le passage de la route (6) à la voie de la sustentation magnétique (8) est assuré par un segment roue - rail (7).

10. Système de véhicule hybride selon revendications 1 et 4, **caractérisé** comme suit : les roues combinées à boudin et à air (26) sont équipées d'un moyeu de roue à commande électrique.

11. Système de véhicule hybride selon revendications 1 à 3, **caractérisé** comme suit : un dispositif d'énergie électrique fixe pour l'éclairage, la commande électrique ainsi que les fonctions de contrôle ainsi qu'un dispositif de freinage fixe sont installés dans les éléments de chasse (15).

12. Système de véhicule hybride selon revendications 1 à 3 et 11, **caractérisé** comme suit : la tête de traction (14) à l'arrière de la cabine du conducteur est équipée d'un segment d'éclisse (19) proportionnellement long, rigide ou flexible.

13. Système de véhicule hybride selon revendications 1 à 3 et 12, **caractérisé** comme suit : un dispositif d'attelage de remorque (18), réglable verticalement et horizontalement, extensible et pivotant et équipé de deux treuils (21) couplés synchrones est installé au dos de la tête de traction (14).

14. Système de véhicule hybride selon revendications 1 à 3 et 11, **caractérisé** comme suit : des fiches de raccordement pour l'alimentation en électricité et pour le dispositif de freinage des éléments de chasse sont placés à côté du dispositif d'attelage de remorque (18) et sont en contact synchrone par l'attelage de remorque extensible.

15. Système de véhicule hybride selon revendications 1 à 3, 11 et 14, **caractérisé** comme suit : les éléments d'embrayage (16) sont prévus sur l'élément de chasse (15) ou sur la tête de traction (14) pour loger les segments d'éclisse (19).

16. Système de véhicule hybride selon revendications 1 à 3, 11, 14 et 15, **caractérisé** comme suit : le châssis (46, 47) des éléments de chasse (15) est composé de tiges rainures (49) qui présentent un contour en forme de S à l'extrémité arrière.

17. Système de véhicule hybride selon revendications 1 à 3 et 16, **caractérisé** comme suit : un support de charge roulant équipé de cylindres (53) est placé dans la tige à rainures du châssis (49).

18. Système de véhicule hybride selon revendication 1, **caractérisé** comme suit : afin de franchir les surfaces discontinues liées au déplacement roue - rail (7), des segments de voie (40, 41, 42, 43) sont abaissables ou rabattables.

19. Système de véhicule hybride selon revendication 1, **caractérisé** comme suit : des rampes sont placées au niveau des aiguillages (39) et des passages à niveau afin d'aplanir le niveau de la voie lors du passage entre route (6) et rail (7) et inversement.

20. Système de véhicule hybride selon revendication 1, **caractérisé** comme suit : la voie limitrophe au passage à niveau, à l'extérieur des rails (7), jouxtant les rails (7) est une dalle (45) carrossable et pivotante, reliée à une barrière de manière à ce que lors de l'ouverture ou de la fermeture de la barrière, la dalle carrossable soit abaissable ou relevable.

21. Système de véhicule hybride selon revendication 1 à 3, **caractérisé** comme suit : une suspension (3) assure le réglage vertical des suspensions (25, 27) du système de véhicule hybride (1).

22. Système de véhicule hybride selon revendication 1, 6 à 7, **caractérisé** comme suit : les roues (5, 26) ainsi que les éléments de sustentation magnétique et de moyens de locomotion (12, 13) du système de véhicule hybride (1) sont déplaçables horizontalement et orthogonalement par rapport au tracé et assurent l'adaptation aux différents écartements.
